# EUROPEAN PATENT SPECIFICATION

(11) **EP 3 569 584 B1**
(45) Date of publication and mention of the grant of the patent: **25.09.2024**
(21) Application number: 19174658.5
(22) Date of filing: 15.05.2019
(51) Int. Cl.: C05D 9/02, C05F 11/02

(54) **COMPOSITION TO PRODUCE ENRICHED CEREALS**
ZUSAMMENSETZUNG FÜR DIE HERSTELLUNG VON ANGEREICHERTEM GETREIDE
COMPOSITION POUR LA PRODUCTION DE CÉRÉALES ENRICHIES

(30) Priority: 16.05.2018 IT 201800005413
(43) Date of publication of application: 20.11.2019
(73) Proprietor: Giacosa, Attilio, 16121 Genova (IT); Rondanelli, Mariangela, 27100 Pavia (IT); Giallombardo, Roberto, 13048 Santhia, Vercelli (IT); Ottaviani, Gianlorenzo, 27100 Pavia (IT); Giallombardo, Luca, 13048 Santhia', Vercelli (IT)
(72) Inventor: GIACOSA, Attilio, I-16121 GENOVA (IT); RONDANELLI, Mariangela, I-27100 PAVIA (IT)
(74) Representative: Long, Giorgio

(56) References cited:
- EP-A2- 0 864 257
- EP-A2- 1 153 901
- WO-A1-2005/105117
- WO-A1-2008/104600
- WO-A1-87/02355
- RU-C1- 2 479 983
- US-A1- 2016 289 129

## Description

The present invention relates to a composition for treating rice, where said composition comprises: selenium, iodine, rice husk ash and optionally leonardite humic extract and/or leonardite as defined in the appended claims. A method for treating rice with said composition is also claimed.

### Background art

In the body, selenium, chemical symbol Se, is found in several vital proteins referred to as selenioproteins, such as for example peroxidases, deiodinases, proteins involved in DNA reproduction and repair.

A deficient intake of selenium has been associated with an increased onset of chronic diseases (Navas-Acien A et al. 2008 Selenium intake and cardiovascular risk: what is new? Current Opinions in Lipidology 19:43-49).

Selenium is found in soil and rocks, accumulates in plants and thus enters the food chain. Selenium is present in most foods, particularly walnuts (especially Brazilian walnuts), fish and seafood, offal (kidney, liver), and meat. Cereals, vegetables and other vegetable foods contain selenium, but its amount is strongly related to the type of soil in which they grow. In Europe, the soil is relatively poor in selenium compared, for example, to United States, Canada and China.

Iodine, chemical symbol I, is a key element for the synthesis of thyroid hormones.

Iodine naturally occurs in various forms. In seas and algae, it is in the form of inorganic salts (sodium or potassium iodide), in diatomic inorganic form (I₂), or in monoatomic organic form. In soil, Iodine is mostly in the form of inorganic salts (NaIO₃, NaIO₄). Iodine concentration in the Earth's crust is about 0.5 mg/kg. It is ubiquitously found in the environment, rocks, soil, sea, and air.

Iodine is mainly taken in through nutrition. It is absorbed in the intestine, is transported in plasma especially as iodide, and is actively captured and concentrated by the thyroid.

An insufficient dietary intake of Iodine is the main cause of hypothyroidism leading to the appearance of thyroid struma and also having multiple other harmful effects on brain growth and development, referred together to as "iodine deficiency disorders". The amount of iodine present in the Earth's crust is highly poor; as a result, over a billion people are exposed to the adverse effects of such a nutritional mineral deficiency. In iodine deficiency, thyroid has difficulty in producing adequate amounts of thyroid hormones. The reduction of serum thyroid hormone concentrations activates the counter-regulation mechanism with an increase in pituitary TSH. The increased stimulation of TSH first corrects the thyroid hormone deficiency without resulting in anatomical changes in the thyroid gland, but, as the iodine deficiency remains, the continuous stimulus exerted by TSH leads to the appearance of nodular formations, and at an advanced stage, goiter. It is estimated that abound 40% of the European population take in insufficient iodine amounts. In Italy, most of the country, even if with a wide variability from area to area, is characterized by an insufficient iodine supply, which situation makes most population exposed to a deficiency of this micro-mineral.

Chen L et al. in J. Agric. Food Chem. 2002, 50(18): 5128-30, disclose the effects of foliar treatment with a composition comprising sodium selenite and sodium selenate. Said treatment was able to raise the levels of selenium in rice to values within the range 0.471-0.640 µg/g, with respect to 0.025 +/- 0.011 µg/g typically found.

Tulyathan A. and Prunglumpu S. in J. Food Biochem. 2009, 33(2): 176-183 disclose rice flour enrichment with iodine, obtained by means of the flour gel coating technique.

No efficient treatments are described for enriching cereals with both the micronutrients of interest.

Therefore, the need to enrich foods with these two microelements - selenium and iodine - is strongly felt.

In fact, these minerals share the following characteristics:
- Both have a vital role in the body in general, and in particular for the thyroid gland activity;
- The amount of iodine and selenium in foods is often low because it is derived from the soil and the soils of most of the world contain poor amounts of both minerals, resulting in an insufficient selenium and iodine intake for a large part of the world population.

EP 1153901 A2, RU 2479983 C1 and WO 2005/105117 A1 disclose an aqueous composition comprising selenium and iodine. RU 2479983 C1 discloses the addition of silicon-containing fertilizers zeolite-like clays

WO 87/02355 A1 discloses a method of preparing a complexing agent by treating leonardite with an oxidizing agent and an alcohol.

EP 0864257 A2 discloses a composition comprising selenium.

WO 2008/104600 A1 discloses a composition comprising iodine.

US 2016/289129 A1 discloses a composition comprising selenium and silicon.

None of these documents discloses or suggests the composition of claim 1.

### Description of the invention

The present invention relates to a composition and method for the foliar treatment of rice which surprisingly lead them to an enrichment in iodine and selenium in a highly available form. It was surprisingly found that adding, in a composition containing the micronutrients iodine and selenium, a silicon-based additive which is rice husk ask, optionally admixed with leonardite humic extracts and/or leonardite in the amounts of claim 1, this composition is able to favor the absorption of the aforementioned micronutrients iodine and selenium by the foliar apparatus of cereal plants.

Leonardite is a natural organic material deriving from the extraction from soil deposits and contains large amounts of humic acids as well as various elements (N, K, S, Ca, etc.), the main one being silicon. Depending on the deposit of origin, leonardite contains silicon (expressed as SiO₂) in amounts generally between 16% by weight and 48% by weight. Silicon in leonardite can be present both as quartz (SiO₂) and Montmorillonite (Si_{B}Al₄O₂₀(OH)₄).

Commercial rice consists of fully ripened caryopses, which are separated from the harvested plant by means of threshing operations. One of the rice by-products is husk, also referred to as pulon, *i.e.* the waste resulting from the operation of husking the raw rice after threshing. The husk percentage on the unhulled rice changes according to the variety threof and is between 17% and 23% by weight. Rice husk has a low nutrient content (about 4.5% by weight), while cellulose represents 45% of the mass. The rice husk is used as a fuel in cogeneration systems, often within the same rice fields.

The rice husk ash, representing about 17% by weight of the initial husk mass, comprises SiO₂ in an amount between 75% and 97% by weight, depending on the method used for incinerating the husk. The morphological structure of silica can also vary from amorphous to partially crystalline depending on the used incineration method.

The rice husk ash also contains various mineral compounds which can be a nutriment for the plant such as aluminum, iron, calcium, magnesium, sulfur, sodium, potassium, and phosphorus oxides.

Therefore, the invention relates to a composition for treating rice, in particular for treating the foliar apparatus of said rice, as defined in the appended composition claims, the definitions of which are an integral part of the present description.

The invention further relates to a method for trating rice, in particular the foliar apparatus of said rice, as defined in the appended method claims, the definitions of which are an integral part of the present description.

### Detailed Description of the invention:

In an embodiment, a composition for the foliar treatment of rice is claimed.

Said composition comprises: selenium, iodine and an silicon-based additive which is rice husk ash, optionally admixed with leonardite humic extract and/or leonardite.

Said composition is an aqueous composition.

In an embodiment, said selenium is in the form of one or more salts, *i.e.* sodium selenite or sodium selenate. Selenium is present in said composition in an amount between 0.001 g to 10 g per liter of aqueous composition.

In an embodiment, said iodine is in the form of one or more salts selected, for example, from the group comprising sodium iodide and iodate, calcium iodide and iodate, magnesium iodide and iodate, ammonium iodide and iodate, zinc iodide and iodate, copper iodide and iodate, barium iodide and iodate, cesium iodide and iodate. Alternatively, said iodine is in the form of iodic anhydride, iodic acid, hydroiodic acid, methyl iodide. In a preferred embodiment, it is potassium iodide. Said iodine is included in said composition at concentrations between 0.01 g/l and 50 g/l of aqueous composition.

The leonardite humic extract, when present, is contained in an amount ranging from 0.1 to 50 ml of leonardite humic extract solution (potassium hydroxide as extraction medium in water) with 14% organic matter, 63% total organic matter (on dry matter), 86% humidified organic matter (on total organic matter), and 0.7% organic nitrogen (on dry matter), in one liter of aqueous composition.

Leonardite, when present, can be used as an aqueous suspension in amounts between 20 mg and 50 g per liter of aqueous composition.

The silicon-based additive is rice husk ash.

The rice husk ash is included in the composition of the invention in amounts ranging from 25 mg to 60 g per liter of aqueous composition.

In some embodiments, the composition of the invention also includes a zinc compound, such as zinc acetate, zinc perchlorate, zinc sulfate, zinc nitrate, and zinc stearate.

The amount of zinc compound used in the aqueous composition ranges from 0.004 mg to 15 g per liter of aqueous composition.

Zinc is a component of hundreds of enzyme complexes involved in the metabolism of proteins, lipids, carbohydrates, and nucleic acids. It is also required for the operation of various hormones, including those of thyroid, insulin, sex hormones, and growth hormone.

The presence of zinc is important both for stabilizing membranes and other cellular components, and for organ structure and integrity. It is essential for cell division and for growth and development during pregnancy, childhood and adolescence. It is also involved in DNA synthesis, gene expression, immune response, wound healing, and tissue repair. Finally, it is involved in the taste and smell perception. An insufficient intake of this nutrient can cause skin changes and hair loss, diarrhea, recurrent infections, psychological problems. In the most severe cases, a deficiency can lead to delays in development and sexual maturation, impotence or weight loss, and can impair taste, smell and wound healing. Furthermore, a zinc deficiency can increase the risk of vitamin A deficiency.

The aqueous composition according to the invention can be prepared by adding the liquid and/or solid components described above to an amount of water, in predetermined amounts.

A preferred process for preparing the liquid composition of the invention comprises the steps of:
a) adding to a water amount a predetermined amount of one or more selenium compounds, one or more iodine compounds, and rice husk ash, optionally admixed with leonardite humic extract and/or leonardite;
b) keeping the suspension obtained according to step a) under stirring;
c) keeping the aqueous composition of step b) at a temperature between 24 °C and 26 °C.

Step b) can be carried out by an external static extrusion mixer and/or an internal stirrer-mixer.

The static extrusion mixer is of the known type and can include shaped and welded steel bars so that each element is welded to its own shell and each shell is welded to the next one being 90°-rotated.

The stirrer-mixer which can be used for the purposes of the invention is of the type adapted for low viscosity products and generally includes a frequency regulator, a polyvinylidene fluoride-coated shaft, and a aggressive agent-resistant propeller.

Step c) is important in order to ensure the correct dispersion of solutes/suspensions in the aqueous composition. Such a step can be carried out by means of suitable heating probes, generally equipped with electric resistors having a cartridge, armored or made of teflon, and thermostated systems.

It is worth noting that steps b) and c) must also be carried out when dispensing the aqueous composition of the invention on the cereals to be treated.

The present invention further relates to a method for treating rice comprising the foliar application of the composition according to the present invention, wherein said composition is applied in one or more treatments carried out between 2 months and one day before harvest, preferably between 1 month and 15 days before harvest.

This treatment is carried out manually or mechanically.

A preferred method for treating rice comprises the following steps:
i) providing an amount of aqueous composition according to claim 1, in an amount ranging between 100 l and 900 l, preferably between 200 l and 500 l, per hectare of crop to be treated, kept under stirring and at a temperature between 24 °C and 26 °C;
ii) spraying the foliar apparatus of the crop to be treated using a nozzle device;
iii) harvesting the rice when ripe.

The optimal time for the spraying step ii) and for the harvesting step iii) can vary from cereal to cereal.

Step ii) is carried out when the rice grain has a moisture between 20% and 30% by weight (measurable by means of a precision hygrometer with digital display for whole rice grains), and step iii) is preferably carried out when the rice grain has a moisture between 18% and 21% by weight (measurable by means of a precision hygrometer with digital display for whole rice grains).

For step ii), one or more air-suction, anti-drift fan nozzles with a flow rate between 1.39 and 1.97 l/min are preferably used.

In a further aspect, the use of the composition according to the present invention for enriching rice in iodine and selenium is claimed.

The composition and method according to the present invention surprisingly allow the rice to be enriched simultaneously in iodine and selenium.

It has also been shown that, due to the composition described herein, rice is not only enriched in selenium and iodine components but said components are highly available.

Particularly interesting is the enrichment of rice with selenium and iodine. As indicated above, selenium and iodine play an essential role in the body, with particular reference to thyroid activity.

Typically, foods are poor in iodine and selenium, especially in countries, such as Italy, where said minerals are poorly found in soils. This means that, for a large part of the world population, the intake of selenium and iodine is insufficient.

Rice, a food having excellent nutritional features, being easy to digest and to absorb, is a widely used cereal. Therefore, enriching said cereal in iodine and selenium would ensure the correct supply of said minerals for most of the population.

It is worth noting that using rice husk ash is very safe for the environment and can be done in organic farming.

In applications that are not part of the present invention, this method can be used for enriching in selenium and iodine many other agricultural products besides cereals, and in particular potato, onion, aubergine, zucchini, sugar beet, cucumber, carrot, tomato, beans, lentils, green beans, chickpeas, soy, watermelon, melon, berries (blackberries, blueberries, currants, raspberries), strawberries.

Moreover, in other applications that are not part of the invention, this method can also be used for agricultural products specifically dedicated to animal feed, such as alfalfa (*Medicago sativa*)*,* clover (*Trifolium pratense*), turnip rape (*Brassica rapa campestris*)*,* and rapeseed (*Brassica napus*)*.*

The scope of protection of the present invention is defined by the claims. The following examples have the mere purpose of exemplifying some embodiments and are not intended to limit the scope of the invention in any way.

### Example 1:

A composition (Composition 1) has been prepared, consisting of: 66.6 g potassium iodide, 11.1 g sodium selenite, 89 ml leonardite humic extract solution (potassium hydroxide as extraction medium in water) with 14% organic matter, 63% total organic matter (on dry matter), 86% humified organic matter (on total organic matter), and 0.7% organic nitrogen (on dry matter), in 44 l of water.

Said composition is applied to a surface of 1000 m² cultivated with "Volano" rice in a single treatment carried out 20 days before the harvest.

The levels of selenium and iodine were measured on the rice harvested. In parallel, the levels of selenium and iodine were measured on "Volano" rice from crops not exposed to the treatment.

Selenium and iodine were measured by atomic absorption spectrophotometry carried out under conditions of 20° ambient temperature and 60% humidity.

As for selenium, ICP-MS (inductively coupled plasma) after acid digestion technology was used. The detection limit referred to as LOD is 0.0083 mg/kg per Se. The quantification limit referred to as LOQ is 0.02 mg/kg per Se. For the precision estimation on cereals, the tests used in the study of LOD and other series of tests at different concentrations carried out on real samples and collected for this purpose were used. For each element analyzed in the different matrices, CV% was calculated, and the data of different CV% was statistically processed by Bartlett's test to check if the differences were due to real differences or simple statistical fluctuations.

The same data used for studying LOD and estimating CV% was used to perform a descriptive statistics of the recoveries. The average recovery obtained is 108.7% for the cereal matrix. In order to estimate the measurement uncertainty, in addition to the method precision, the uncertainty components related to systematic effects on mass and volume measurements, calibration curve, and curve point control were evaluated. A T-test was performed to assess whether the uncertainty component due to recovery is significant, the T-test gave a positive result, therefore recovery in estimating uncertainty was not considered.

For iodine measurement, the technique was ICP-MS after digestion. The detection limit, referred to as LOD, is 0.025 mg/kg for iodine in cereals. The quantification limit, referred to as LOQ, is 0.125 mg/kg for iodine in cereals. The measuring range is between 0.125 mg/kg and 12.5 mg/kg. For the precision estimation, the repeated tests used for the LoD study and two other series of repeated tests performed at a medium and medium-high concentration of the calibration curve were used. The tests were subjected to a Bartlett's statistical test to check if the variances were statistically equal or if the differences were due to real differences or statistical fluctuations. The statistical analysis shows that it is not possible to exclude that variances are statistically equal for different concentrations analyzed and for different matrices, therefore it is decided to assign a CV% of 2.23% for iodine in cereals over the whole range of measurement. The same data used for the LoD study to estimate CV% was used to perform a descriptive statistics of the recoveries. The average recovery obtained for iodine in cereals is 105.59%. The correction for recovery is not applied. In order to estimate the measurement uncertainty, in addition to the method precision, the uncertainty components related to systematic effects on mass and volume measurements, calibration curve, and curve point control were evaluated. A T-test was performed to assess whether the uncertainty component due to recovery was significant, the T-test gave a positive result, therefore it was decided not to consider recovery in estimating uncertainty. For iodine in cereals, a relative compound uncertainty of 9.0% is obtained. Since there are no A-type extimations obtained from less than ten repeated measurements, k = 2 was choosen as a coverage factor, thus obtaining a relative extended uncertainty of 18.1%.

The obtained results are reported in Table 1:

**Table 1: selenium and iodine amounts in the presence or absence of the treatment according to the present invention.**

| Crop | Selenium (µg/g) | Iodine (µg/g) |
|---|---|---|
| "Volano" exposed to a treatment with composition 1 | 0.67 ± 0.15 | between 0.13 and 0.025 |
| Untreated "Volano" | 0.085 ± 0.019 | Not measurable |

### Example 2:

A composition (Composition 2) has been prepared, consisting of: 66.6 g potassium iodide, 11.1 g sodium selenite, 89 ml leonardite humic extract solution (potassium hydroxide as extraction medium in water) with 14% organic matter, 63% total organic matter (on dry matter), 86% humified organic matter (on total organic matter), and 0.7% organic nitrogen (on dry matter), in 44 l of water.

Said composition is applied to a surface of 1000 m² cultivated with "Volano" rice in a single treatment carried out 20 days before the harvest. A further composition (Composition 3) has been prepared, consisting of: 66.6 g potassium iodide, 89 ml leonardite humic extract solution (potassium hydroxide as extraction medium in water) with 14% organic matter, 63% total organic matter (on dry matter), 86% humified organic matter (on total organic matter), and 0.7% organic nitrogen (on dry matter), in 44 l of water.

Said Composition 3 was used to treat, 10 days before the harvest, the same crop already treated with said Composition 2.

The obtained results, in terms of enrichment in selenium and iodine, measured under the same experimental conditions as Example 1, are shown in Table 2:

**Table 2: selenium and iodine amounts in the presence or absence of the treatment according to the present invention.**

| Crop | Selenium (µg/g) | Iodine (µg/g) |
|---|---|---|
| "Volano" exposed to a first treatment with composition 2 and to a second treatment with composition 3 | 0.89 ± 0.19 | between 0.13 and 0.025 |
| Untreated "Volano" | 0.085 ± 0.019 | Not measurable |

### Example 3:

A composition (Composition 4) was prepared, consisting of: 66.6 g potassium iodide, 11.1 g sodium selenite, 100 g rice husk ash in 44 l of water.

Said composition is applied to a surface of 1000 m² cultivated with "Volano" rice in a single treatment carried out 20 days before the harvest. The grain moisture at the time of the foliar spraying was 28% by weight. The technological methods of spraying were characterized by: 1) using an extruder outside the spraying barrel for blending the mixture; 2) using a stirrer-mixer inside the barrel containing the mixture to be sprayed which was kept active for 10 minutes before starting the spraying operation and active during the whole spraying period; 3) composition temperature of about 25 °C; 4) using an air-suction, anti-drift fan nozzle.

The levels of selenium and iodine were measured on the rice harvested. In parallel, the levels of selenium and iodine were measured on "Volano" rice from crops not exposed to the treatment.

Selenium and iodine were measured by atomic absorption spectrophotometry carried out under conditions of 20° ambient temperature and 60% humidity.

The measurement of the amounts of selenium and iodine in the cereal was carried out as described in Example 1.

The results obtained are shown in Table 3:

**Table 3: selenium and iodine amounts in the presence or absence of the treatment according to the present invention.**

| Crop | Selenium (µg/g) | Iodine (µg/g) |
|---|---|---|
| "Volano" rice exposed to a treatment with composition 3 | 0.69 ± 0.16 | between 0.13 and 0.025 |
| Untreated "Volano" rice | 0.085 ± 0.019 | Not measurable |

### Example 4:

A composition (Composition 4) was prepared, consisting of: 66.6 g potassium iodide, 11.1 g sodium selenite, 100 g rice husk ash in 44 l of water.

Said composition is applied to a surface of 1000 m² cultivated with "Volano" rice in a single treatment carried out 20 days before the harvest, with a percentage of grain moisture of 28% by weight.

A further composition (Composition 5) was prepared, consisting of: 66.6 g potassium iodide, 100 g rice husk ash in 44 l of water. Said composition 5 was used to treat, 10 days before the harvest (with grain moisture of 21% by weight), the same crop already treated with Composition 4.

The obtained results, in terms of enrichment in selenium and iodine, measured under the same experimental conditions as Example 1, are shown in Table 4:

**Table 4: selenium and iodine amounts in the presence or absence of the treatment according to the present invention**

| Crop | Selenium (µg/g) | Iodine (µg/g) |
|---|---|---|
| "Volano" rice exposed to a first treatment with composition 4 and to a second treatment with composition 5 (data calculated on dehulled rice) | 0.87 ± 0.21 | between 0.13 and 0.025 |
| Untreated "Volano" rice | 0.085 ± 0.019 | Not measurable |

### Example 5:

A composition (Composition 6) was prepared, consisting of: 1700 g potassium iodide, 75 g sodium selenite, 500 g rice husk ash in 400 l of water.

Said composition is applied to an area of 5000 m² cultivated with "Volano" rice in a single treatment carried out 10 days before the harvest, with grain moisture of 23% by weight.

The obtained results, in terms of selenium and iodine enrichment, measured under the same experimental conditions as Example 1, are shown in Table 5:

**Table 5: selenium and iodine amounts in the presence or absence of the treatment according to the present invention.**

| Crop | Selenium (µg/g) | Iodine (µg/g) |
|---|---|---|
| "Volano" rice exposed to a treatment with composition 6 (data calculated on dehulled rice) | 0.156 ± 0.04 | 0.495 ± 0.07 |
| Untreated "Volano" rice | 0.081 ± 0.018 | Not measurable |

### Example 6:

A composition (Composition 7) was prepared, consisting of: 1700 g potassium iodide, 75 g sodium selenite, 1000 g rice husk ash in 400 l of water.

Said composition is applied to an area of 10000 m² cultivated with "Volano" rice in a single treatment carried out 7 days before the harvest, with grain moisture of 18% by weight.

The obtained results, in terms of selenium and iodine enrichment, measured under the same experimental conditions as Example 1, are shown in Table 6:

**Table 6: selenium and iodine amounts in the presence or absence of the treatment according to the present invention.**

| Crop | Selenium (µg/g) | Iodine (µg/g) |
|---|---|---|
| "Volano" rice exposed to a treatment with composition 7 (data calculated on dehulled rice) | 0.063 ± 0.013 | 0.025 ± 0.07 |
| Untreated "Volano" rice | 0.081 ± 0.018 | Not measurable |

This example shows the importance of the percentage of grain moisture at the time of spraying the composition of the invention. If this moisture is below the indicated range, the amount of selenium and iodine taken in by the rice is considerably lower.

## Claims

1. A composition for treating rice, wherein said composition comprises: selenium, iodine and an additive which is rice husk ash, optionally in admixture with leonardite humic extract and/or leonardite, wherein the composition is an aqueous composition, wherein:
- said selenium is present in said composition in an amount from 0.001 g to 10 g per liter of aqueous composition;
- said iodine is included in said composition at concentrations from 0.01 to 50 g/l of aqueous composition, and
- said rice husk ash is included in the composition in amounts from 25 mg to 60 g per liter of aqueous composition.

2. The composition according to claim 1, wherein said selenium is in the form of one or more salts, selected from the group comprising sodium selenite, sodium selenate.

3. The composition according to one of claims 1 to 2, wherein said iodine is in the form of one or more salts selected from the group comprising sodium iodide and iodate, calcium iodide and iodate, magnesium iodide and iodate, ammonium iodide and iodate, zinc iodide and iodate, copper iodide and iodate, barium iodide and iodate, cesium iodide and iodate, potassium iodide.

4. The composition according to one of claims 1 to 3, wherein said iodine is in the form of iodic anhydride, iodic acid, hydroiodic acid, methyl iodide.

5. The composition according to one of claims 1 to 4, wherein:
- said leonardite humic extract, when present, is present in an amount from 0.1 to 50 ml of leonardite humic extract solution, using potassium hydroxide as extraction medium in water, with 14% organic matter, 63% total organic matter, on dry matter, 86% humidified organic matter on total organic matter, 0.7% and organic nitrogen on dry matter, in a liter of water; and/or
- said leonardite, when present, is present as an aqueous suspension in amounts from 20 mg to 50 g per liter of aqueous composition.

6. The composition according to any one of claims 1 to 5, comprising a zinc compound preferably selected from zinc acetate, zinc perchlorate, zinc sulfate, zinc nitrate and zinc stearate, in an amount from 0.004 mg to 15 g per liter of aqueous composition.

7. A process for preparing the liquid composition according to one of claims 1 to 6, comprising the steps of:
a) adding to a water amount a predetermined amount of one or more selenium compounds, one or more iodine compounds, and rice husk ash, optionally in admixture with leonardite humic extract and/or leonardite;
b) keeping the suspension obtained according to step a) under stirring;
c) keeping the aqueous composition of step b) at a temperature between 24 °C and 26 °C.

8. A method for treating rice, comprising the application of the composition according to one of claims 1 to 6 to the foliar apparatus of the rice, comprising:
i) providing an amount of aqueous composition according to any one of claims 1 to 8, in an amount ranging between 100 l and 900 l, preferably between 200 l and 500 l, per hectare of crop to be treated, kept under stirring and at a temperature between 24 °C and 26 °C;
ii) spraying the foliar apparatus of the crop to be treated using a nozzle device;
iii) harvesting the rice when ripe,
and wherein step ii) is carried out when the rice grain has a moisture between 20% and 30% by weight (measurable by means of a precision hygrometer with digital display for whole rice grains) and step iii) is preferably carried out when the rice grain has a moisture between 18% and 21% by weight (measurable by means of a precision hygrometer with digital display for whole rice grains).

9. Use of the composition according to one of claims 1 to 6 for enriching rice in iodine and selenium.

## Patentansprüche

1. Zusammensetzung zum Behandeln von Reis, wobei die Zusammensetzung umfasst: Selen, lod und ein Additiv, das Reisschalenasche ist, optional in Beimischung mit Leonardit-Humin-Extrakt und/oder Leonardit, wobei die Zusammensetzung eine wässrige Zusammensetzung ist, wobei:
- Selen in der Zusammensetzung in einer Menge von 0,001 g bis 10 g pro Liter wässriger Zusammensetzung vorliegt;
- lod in der Zusammensetzung in Konzentrationen von 0,01 bis 50 g/l wässriger Zusammensetzung enthalten ist, und
- Reisschalenasche in der Zusammensetzung in Mengen von 25 mg bis 60 g pro Liter wässriger Zusammensetzung enthalten ist.

2. Zusammensetzung nach Anspruch 1, wobei Selen in Form eines oder mehrerer Salze vorliegt, ausgewählt aus der Gruppe, umfassend Natriumselenit, Natriumselenat.

3. Zusammensetzung nach einem der Ansprüche 1 bis 2, wobei lod in Form eines oder mehrerer Salze vorliegt, ausgewählt aus der Gruppe, umfassend Natriumiodid und -iodat, Calciumiodid und -iodat, Magnesiumiodid und -iodat, Ammoniumiodid und -iodat, Zinkiodid und -iodat, Kupferiodid und -iodat, Bariumiodid und -iodat, Caesiumiodid und - iodat, Kaliumiodid.

4. Zusammensetzung nach einem der Ansprüche 1 bis 3, wobei lod in Form von lodsäureanhydrid, Iodsäure, lodwasserstoffsäure, Methyliodid vorliegt.

5. Zusammensetzung nach einem der Ansprüche 1 bis 4, wobei:
- Leonardit-Humin-Extrakt, wenn vorhanden, in einer Menge von 0,1 bis 50 ml Leonardit-Humin-Extrakt-Lösung unter Verwendung von Kaliumhydroxid als Extraktionsmedium in Wasser mit 14 % organischer Substanz, 63 % gesamter organischer Substanz, auf Trockensubstanz, 86 % befeuchteter organischer Substanz, auf gesamter organischer Substanz, und 0,7 % organischem Stickstoff, auf Trockensubstanz, in einem Liter Wasser vorhanden ist; und/oder
- Leonardit, wenn vorhanden, als wässrige Suspension in Mengen von 20 mg bis 50 g pro Liter wässriger Zusammensetzung vorhanden ist.

6. Zusammensetzung nach einem der Ansprüche 1 bis 5, umfassend eine Zinkverbindung, bevorzugt ausgewählt aus Zinkacetat, Zinkperchlorat, Zinksulfat, Zinknitrat und Zinkstearat, in einer Menge von 0,004 mg bis 15 g pro Liter der wässrigen Zusammensetzung.

7. Verfahren zum Herstellen der flüssigen Zusammensetzung nach einem der Ansprüche 1 bis 6, umfassend die Schritte:
a) Zugeben, zu einer Wassermenge, eine vorbestimmte Menge einer oder mehrerer Selenverbindungen, eine oder mehrere lodverbindungen und Reisschalenasche, optional in Beimischung mit Leonardit-Humin-Extrakt und/oder Leonardit;
b) Beibehalten der gemäß Schritt a) erhaltenen Suspension unter Rühren;
c) Beibehalten der wässrigen Zusammensetzung aus Schritt b) bei einer Temperatur zwischen 24°C und 26°C.

8. Verfahren zum Behandeln von Reis, umfassend die Applikation der Zusammensetzung nach einem der Ansprüche 1 bis 6 auf den Blattapparat des Reises, umfassend:
i) Bereitstellen einer Menge der wässrigen Zusammensetzung nach einem der Ansprüche 1 bis 8 in einer Menge zwischen 100 l und 900 I, bevorzugt zwischen 200 l und 500 l, pro Hektar der zu behandelnden Nutzpflanze unter Rühren und bei einer Temperatur zwischen 24°C und 26°C;
ii) Besprühen des Blattapparates der zu behandelnden Nutzpflanze unter Verwendung einer Düsenvorrichtung;
iii) Ernten des Reises, wenn er gereift ist,
und wobei Schritt ii) durchgeführt wird, wenn das Reiskorn eine Feuchtigkeit zwischen 20 Gew.-% und 30 Gew.-% aufweist (messbar mittels eines Präzisionshygrometers mit Digitalanzeige für ganze Reiskörner) und Schritt iii) bevorzugt durchgeführt wird, wenn das Reiskorn eine Feuchtigkeit zwischen 18 Gew.-% und 21 Gew.-% aufweist (messbar mittels eines Präzisionshygrometers mit Digitalanzeige für ganze Reiskörner).

9. Verwendung der Zusammensetzung nach einem der Ansprüche 1 bis 6 zur Anreicherung von Reis mit lod und Selen.

## Revendications

1. Composition de traitement du riz, dans laquelle ladite composition comprend : du sélénium, de l'iode et un additif qui est une cendre de balle de riz, éventuellement en mélange avec un extrait humique de léonardite et/ou de la léonardite, dans laquelle la composition est une composition aqueuse, dans laquelle :
- ledit sélénium est présent dans ladite composition en une quantité de 0,001 g à 10 g par litre de composition aqueuse ;
- ledit iode est inclus dans ladite composition dans des concentrations de 0,01 à 50 g/l de composition aqueuse, et
- ladite cendre de balle de riz est incluse dans la composition en des quantités de 25 mg à 60 g par litre de composition aqueuse.

2. Composition selon la revendication 1, dans laquelle ledit sélénium se présente sous la forme d'un ou de plusieurs sels, sélectionnés dans le groupe comprenant le sélénite de sodium, le sélénate de sodium.

3. Composition selon l'une des revendications 1 à 2, dans laquelle ledit iode se présente sous la forme d'un ou de plusieurs sels sélectionnés dans le groupe comprenant l'iodure et l'iodate de sodium, l'iodure et l'iodate de calcium, l'iodure et l'iodate de magnésium, l'iodure et l'iodate d'ammonium, l'iodure et l'iodate de zinc, l'iodure et l'iodate de cuivre, l'iodure et l'iodate de baryum, l'iodure et l'iodate de césium, l'iodure de potassium.

4. Composition selon l'une des revendications 1 à 3, dans laquelle ledit iode se présente sous la forme d'anhydride iodique, d'acide iodique, d'acide iodhydrique, d'iodure de méthyle.

5. Composition selon l'une des revendications 1 à 4, dans laquelle :
- ledit extrait humique de léonardite, lorsqu'il est présent, est présent en une quantité de 0,1 à 50 ml de solution d'extrait humique de léonardite, en utilisant de l'hydroxyde de potassium comme milieu d'extraction dans de l'eau, avec 14 % de matière organique, 63 % de matière organique totale, sur la base de la matière sèche, 86 % de matière organique humidifiée sur la base de la matière organique totale, et 0,7 % d'azote organique sur la base de la matière sèche, dans un litre d'eau ; et/ou
- ladite léonardite, lorsqu'elle est présente, est présente sous la forme d'une suspension aqueuse en des quantités de 20 mg à 50 g par litre de composition aqueuse.

6. Composition selon l'une quelconque des revendications 1 à 5, comprenant un composé de zinc de préférence sélectionné parmi l'acétate de zinc, le perchlorate de zinc, le sulfate de zinc, le nitrate de zinc et le stéarate de zinc, en une quantité de 0,004 mg à 15 g par litre de composition aqueuse.

7. Procédé de préparation de la composition liquide selon l'une des revendications 1 à 6, comprenant les étapes suivantes :
a) l'ajout, à une quantité d'eau, d'une quantité prédéterminée d'un ou de plusieurs composés de sélénium, d'un ou de plusieurs composés d'iode et de cendre de balle de riz, éventuellement en mélange avec un extrait humique de léonardite et/ou de la léonardite ;
b) le maintien de la suspension obtenue selon l'étape a) sous agitation ;
c) le maintien de la composition aqueuse de l'étape b) à une température comprise entre 24 °C et 26 °C.

8. Procédé de traitement du riz, comprenant l'application de la composition selon l'une des revendications 1 à 6 sur l'appareil foliaire du riz, comprenant :
i) la fourniture d'une quantité de composition aqueuse selon l'une quelconque des revendications 1 à 8, en une quantité comprise entre 100 1 et 900 1, de préférence entre 2001 et 500 1, par hectare de culture à traiter, maintenue sous agitation et à une température comprise entre 24 °C et 26 °C ;
ii) la pulvérisation de l'appareil foliaire de la culture à traiter en utilisant un dispositif à buse ;
iii) la moisson du riz à maturité,
et dans lequel l'étape ii) est effectuée lorsque le grain de riz a une humidité comprise entre 20 % et 30 % en poids (mesurable au moyen d'un hygromètre de précision à affichage numérique pour les grains de riz complet) et l'étape iii) est de préférence effectuée lorsque le grain de riz a une humidité comprise entre 18 % et 21 % en poids (mesurable au moyen d'un hygromètre de précision à affichage numérique pour les grains de riz complet).

9. Utilisation de la composition selon l'une des revendications 1 à 6 pour enrichir le riz en iode et en sélénium.
